Europäisches Patentamt

European Patent Office

Office européen des brevets

(19)

(11) Publication number : **0 102 902 B2**

## (12) NEW EUROPEAN PATENT SPECIFICATION

(45) Date of publication of the new patent
specification : **01.12.93 Bulletin 93/48**

(51) Int. Cl.⁵ : **B01J 20/20**

(21) Application number : **83401729.5**

(22) Date of filing : **31.08.83**

(54) Carbon molecular sieves and a process for their preparation.

The file contains technical information
submitted after the application was filed and
not included in this specification

(30) Priority : **07.09.82 US 415103**

(43) Date of publication of application :
**14.03.84 Bulletin 84/11**

(45) Publication of the grant of the patent :
**21.10.87 Bulletin 87/43**

(45) Mention of the opposition decision :
**01.12.93 Bulletin 93/48**

(84) Designated Contracting States :
**AT BE CH DE FR GB IT LI LU NL SE**

(56) References cited :
**FR-A- 2 134 965**

(56) References cited :
**FR-A- 2 215 997**
**US-A- 3 962 129**
**CHEMICAL ABSTRACTS, vol. 83, no. 20, 17**
**November1 975, p. 136, no. 166383r, Colum-**
**bus, Ohio (US); S.P.NANDI et al.: "Carbon**
**molecular sieves for the concentration of**
**oxygen from air"**

(73) Proprietor : **CALGON CARBON**
**CORPORATION**
**400 Media Drive**
**Robinson Township Pennsylvania 15205 (US)**

(72) Inventor : **Sutt, Robert F., Jr.**
**209 Winridge Drive**
**Coraopolis, PA 15108 (US)**

(74) Representative : **Müller-Boré & Partner**
**Patentanwälte**
**Postfach 26 02 47**
**D-80059 München (DE)**

EP 0 102 902 B2

## Description

Background of the invention

Carbon molecular sieves are porous substrates with an open-network structure of controlled molecular dimension which may be used to separate mixtures of small molecular gases or liquids from larger molecular sized gases or liquids based on a difference in molecular size or a difference in diffusivity rates. See for example. *Grant* US-A-3,884,830 and references cited therein.

Carbon molecular sieves need not be activated carbons. Activated carbons are carbonaceous substrates which have been subjected to an activating agent, such as steam, carbon dioxide, oxidizing agents and the like.

Carbon molecular sieve: have been prepared from a variety of substrates by a number of different manufacturing processes. See for example, *Mason et al.*, US-A-3,222,412, employing anthracite coal, elevated temperatures and an inert atmosphere; *Munzner et al.,* US-A-3,801,513, employing coke or coconut shells, elevated temperatures and pore blocking by carbon deposition; *Yuki,* US-A-4-046,709 employing vinylidene chloride copolymers and elevated temperatures; and *Vesterdal,* US-A-2,556,859 employing bituminous coal or coconut shells, elevated temperatures and an inert atmosphere.

Carbon molecular sieves have generally been prepared in an externally fired rotary kiln or other similar batch-type furnace. The major difficulties associated with the noncontinuous batch-type manufacture of carbon molecular sieves are (1) the difficulty of maintaining furnace atmospheric and temperature limits for the control of sieves more diameter and (2) the product variability from batch to batch, i.e., quality control. See *Munzner et al.*, US-A-3,962,129.

Carbon molecular sieve average effective pore diameters are generally governed by the following factors:
(A) furnace temperature
(B) furnace atmosphere
(C) residence time
(D) presence or absence of a pore blocking substance
Control of the first two conditions has been a major problem associated with the prior art noncontinuous, batch-type manufacturing processes.

The use of a continuous feed type heating means, as described herein, overcomes the difficulties associated with atmosphere and temperature control of noncontinuous, batch processes, thereby assuring pore diameter selection and overall sieve quality control. The instant process also generates carbon sieves with better selectivity and capacity values than prior art batch processes.

Brief description of the drawings

The Fig. is a schematic diagram of the system employed herein for the continuous manufacture of carbon molecular sieves.

Summary of the invention

A process for continuously manufacturing carbon molecular sieves which comprises heating a charred substrate at a minimum temperature of 482°C (900°F) for at least 5 minutes in a continuous manner and continuously collecting the sieves thus produced is described. The invention is also directed to novel carbon molecular sieves.

Detailed description

The present invention is directed to a process for the manufacture of carbon molecular sieves. The novel process of this invention involves the steps of continuously feeding a charred substrate to a means for heating said substrate and heating said substrate under oxygen free conditions of less than 100 ppm oxygen and under an inert gas purge without the use of an externally added pore blocking substance, at a temperature range of about 482°C to 1093°C for a time period of about 5 minutes to 90 minutes. Carbon molecular sieves of from 0.2 to 1.5 nm pore diameter may be produced by this process. The novel carbon molecuiar sieves of this invention have an average effective pore diameter of about 0.4 nm.

The terms "externally added pore blocking substance" as used herein, refer to those substances recognized in the art as deposits applied to a carbon substrate prior to or during heating to constrict the substrate micropores. See, for example. US-A-3,801,513; US-A-3,222,412; US-A-2,761,822; CA-A-608,038 and GB-A-1,138,307. In each of these references. the micropores of the carbon substrate are constricted by some added material. These materials may be solids, liquids or gases which may be subsequently carbonized by heating to leave pure carbon constricting the micropores of the substrate.

The terms "oxygen free" as used herein refer to a furnace atmosphere having a maximum oxygen content of less than 100 ppm, by volume prior to and during the manufacture of the carbon sieves.

The terms "charred substrate" refer to those non-cokable or decoked materials useful for preparing carbon molecular sieves by the process described herein. Typical non cokable substrates include, coconut char, babassu nut char, anthracite, high ranking bituminous coals and other non-cokable substrates recognized in the art. Decoked substrates include oxidized (decoked) medium volatile bituminous and lignite coals and other decoked substrates recognized in the art.

The charred substrate is generally crushed and screened to the desired mesh size. Mesh size is not a critical factor. U.S. Sieve sizes of from 3×6 to 50×100 may be employed. For nut chars the mesh size generally used was 8×30 U.S. Sieve. The substrates, especially those made from coal may require agglomeration. Agglomeration techniques are adequately described in U.S. Patent No. 3,884,830. Following agglomeration, the substrates may be sized and screened as desired.

Carbon molecular sieve average effective pore diameters are generally governed by the following factors:
(A) furnace temperature
(B) furnace atmosphere
(C) residence time
(D) presence or absence of a pore blocking substance.

In the present invention the control of pore diameter determinative factors was achieved by modifying the heating time, temperature and atmosphere processing conditions. A preferred heating means for carrying out this invention is described in US-A-4,050,900 and US-A-3,648,630 which are herein incorporated by reference. Other heating means that may prove useful in the instant process include indirectly fired rotary kilns, the Selas type indirectly fired or electrically fired screw conveyor kiln or some of the various types of metal treating furnaces (e.g., Lindberg) known in the art as modified for continuous type processing.

The preferred system consists of a feed assembly, the heating means, and a product cooling section (see the Fig.). Air locks are located between the feed assembly and the heating means and on the discharge end of the product cooling section. A preferred heating means is an electrically fired continuous transport type furnace having two independently controlled hot zones. Each hot zone contains silicon carbide infrared glow bars controlled by centrally located chromel-alumel thermocouples.

The furnace atmosphere is maintained in an oxygen free condition during the manufacturing process by purging of the system with an oxygen free inert gas such as nitrogen. Purging may be accomplished by either cocurrent or countercurrent inert gas flow relative to substrate feed flow. Countercurrent purging is preferred. Off gases containing combustible components are destroyed in an afterburner.

The system backpressure is controlled by means of a valve located in the stack between the furnace and the afterburner.

In conducting the instant process the furnace was initially brought to the desired temperature under an inert gas purge. Belt speed was set to adjust furnace residence time. The furnace generally reached a steady state in 6 to 8 hours and then feed was begun. Decoked or non-coking substrate was fed through the system under a blanket of inert gas thereby producing carbon molecular sieves. Completion of a furnace run was accomplished by turning the feed system off and clearing the furnace. Process conditions for producing sieves having average effective pore diameters of from 2 to 15 Å (0.2 to 1.5 nm) were as follows

|  |  | Range | Preferred |
| --- | --- | --- | --- |
| (A) | temperature | 482°C to 1093°C | 760°C to 1038°C |
| (B) | residence time | 5 to 90 min. | 5 to 30 min. |
| (C) | feed rate | 6.8 to 27.2 kg/hr | 13.6 to 22.7 kg/hr |
| (D) | $N_2$ purge rate | 424.7 to 991.1 $dm^3$/min | 566.3 to 849.5 $dm^3$/min |

If the furnace temperature was adjusted, about one to two hours was generally required for the furnace to equilibrate. Furnace temperature and residence time were found to be inversely related. Long residence times coupled with low temperatures produced sieves similar to those manufactured at high temperatures with shorter residence times.

To be effective as a molecular sieve, the product must have (1) a high selectivity ratio and (2) a high capacity value.

The terms selectivity and capacity refer to diffusivity characteristics of a molecular sieve. Gas diffusivity refers to the speed with which a gas sample passes into or out of the pores of a particular molecular sieve. Selectivity is defined as the ratio of the two gas diffusivity values. A high selectivity value indicates that the sieve readily discriminates between gas mixture components based on both kinetic end thermodynamic factors. A high capacity value indicates that a small amount of molecular sieve will adsorb a large volume of gas.

The novel carbon molecular sieves of the present invention have the following physical characteristics:

|  |  | Range | Preferred |
|---|---|---|---|
| (A) | oxygen diffusivity $\times 10^{-8}$ cm/sec$^2$ | 500—900 | 650—750 |
| (B) | oxygen/nitrogen selectivity ratio | 6.5—8.5 | 7.0—7.5 |
| (C) | oxygen capacity cc/g | 6.00—8.00 | same |
| (D) | oxygen capacity cc/cc | 4.00—6.00 | same |
| (E) | apparent density g/cc | 0.60—0.70 | 0.64—0.70 |
| (F) | average effective pore diameter about 4 Angstroms. | | |

The following examples demonstrate the process for preparing novel carbon molecular sieves from sized (8×30 U.S. Sieve) Phillipine coconut char (Montenegro) having an apparent density of about 0.61 g/cc. Process conditions were as follows:

|  |  | Range | Preferred |
|---|---|---|---|
| (A) | temperature | 927°C to 1093°C | 982°C to 1038°C |
| (B) | residence time | 5 to 90 min. | 15 to 30 min. |
| (C) | feed rate | 6.8 to 27.2 kg/hr | 13.6 to 22.7 kg/hr |
| (D) | $N_2$ purge rate | 424.7 to 991.1 dm$^3$/min | 707.9 to 991.1 dm$^3$/min |

While these examples are directed to a preferred embodiment, it is expected that other non-coking or decoked substrates will produce a carbon molecular sieve having the characteristics described herein when employing process parameters similar to those described herein.

The following examples merely illustrate the present invention. They are not intended to limit the scope of the invention in any manner.

Example 1

Coconut char was fed to the furnace at 30 pounds per hour. The furnace temperature was 1800°F and the furnace residence time was 30 minutes. A constant nitrogen purge was maintained at 25 standard cubic feed per minute (707.9 dm$^3$/min)

To calculate a test gas (e.g., oxygen, nitrogen, etc.) diffusivity value the dead volume of a sample cell containing about 10 grams of carbon sieve was determined by helium expansion. The test gas was then expanded into the reevacuated sample cell from a one liter reference cell. Knowing the dead volume, adsorption (loading) of any test gas was monitored by the change in pressure of the system. These values combined with an equilibrium loading value calculated for a sieve sample after one hour (at STP) allowed the determination of a relative loading value ($Lt/Le$). $Lt$ was the test gas loading value of a sieve sample at a given time, for example 30 seconds, and $Le$ was the test gas loading value of a sieve sample at equilibrium. The gas diffusivity value ($D$) of a sieve sample was then calculated for the test gas by solving the simplified equation for diffusion into a sphere:

$$Lt/Le = 6 \ (Dt/\pi \ R_0^2)^{1/2} - 3Dt/R_0^2$$

where

D=gas diffusivity value

t=time in seconds

R$_0$=mean particle radius of a carbon sieve (0.05125 cm)

See: Dedrick, R. L. and Beckmann, R. B., "Kinetics of Adsorbtion by Activated Carbon from Dilute Aqueous Solution," *Physical Adsorption Processes and Principles,* L. N. Canjar and J. A. Kostecki, eds., Vol. 63, American Institute of Chemical Engineers, New York (1967); Walker, P. L., Jr., Austin, L. G., Nandi, S. P., "Activated Diffusion of Gases in Molecular Sieve Materials", *The Chemistry and Physics of Carbon,* P. L. Walker, Jr., ed., Vol. 2, Marcel Dekker, Inc., New York (1966) and Crank, J., "The Mathematics of Diffusion", 2nd Ed., Clarendon Press, Oxford (1975).

Determination of oxygen and nitrogen diffusivity values allowed for calculation of the oxygen/nitrogen selectivity ratio: S=DO$_2$/DN$_2$.

A carbon sieve having the following physical characteristics was produced:

(A) oxygen diffusivity$\times 10^{-8}$ cm/sec$^2$    693

(B) oxygen/nitrogen selectivity ratio    7.19

(C) oxygen capacity cc/g    7.68

(D) oxygen capacity cc/cc    5.29

(E) apparent density g/cc    0.688

Example 2

Coconut char was fed to the furnace at 30 pounds per hour. The furnace temperature was 982°C and the furnace residence time was 30 minutes. A constant nitrogen purge was maintained at 25 SCFM (707.9 dm$^3$/hr). Gas diffusivity values were calculated as described in Example 1. A carbon sieve having the following physical characteristics was produced:

(A) oxygen diffusivity$\times 10^{-8}$ cm/sec$^2$    721

(B) oxygen/nitrogen selectivity ratio    6.68

(C) oxygen capacity cc/g    7.56

(D) oxygen capacity cc/cc    5.22

(E) apparent density g/cc    0.691

Example 3

Coconut char was fed to the furnace at 30 pounds per hour. The furnace temperature was 982°C and the furnace residence time was 45 minutes. A constant nitrogen purge was maintained at 25 SCFM (707.9 dm$^3$/hr). Gas diffusivity values were calculated as described in Example 1. A carbon sieve having the following physical characteristics was produced:

(A) oxygen diffusivity$\times 10^{-8}$ cm/sec$^2$    584

(B) oxygen/nitrogen selectivity ratio    6.83

(C) oxygen capacity cc/g    8.35

(D) oxygen capacity cc/cc    5.58

(E) apparent density g/cc    0.668

Example 4

Coconut char was fed to the furnace at 30 pounds per hour. The furnace temperature was 1010°C and the furnace residence time was 15 minutes. A constant nitrogen purge was maintained at 35 SCFM (991.1 dm$^3$/min). Gas diffusivity values were calculated as described in Example 1. A carbon sieve having the following physical characteristics was produced:

(A) oxygen diffusivity$\times 10^{-8}$ cm/sec$^2$    580

(B) oxygen/nitrogen selectivity ratio    7.91

(C) oxygen capacity cc/g    7.49

(D) oxygen capacity cc/cc    4.82

(E) apparent density g/cc    0.643

Example 5

Coconut char was fed to the furnace at 30 pounds per hour. The furnace temperature was 1010°C and the furnace residence time was 15 minutes. A constant nitrogen purge was maintained at 35 SCFM (991.1 dm$^3$/min). Gas diffusivity values were calculated as described in Example 1. A carbon sieve having the following physical characteristics was produced:

(A) oxygen diffusivity$\times10^{-8}$ cm/sec$^2$     588
(B) oxygen/nitrogen selectivity ratio     8.02
(C) oxygen capacity cc/g     7.31
(D) oxygen capacity cc/cc     4.99
(E) apparent density g/cc     0.682

Example 6

Coconut char was fed to the furnace at 60 pounds per hour. The furnace temperature was 1010°C and the furnace residence time was 15 minutes. A constant nitrogen purge was maintained at 35 SCFM (991.1 dm$^3$/min). Gas diffusivity values were calculated as described in Example 1. A carbon sieve having the following physical characteristics was produced:

(A) oxygen diffusivity$\times10^{-8}$ cm/sec$^2$     711
(B) oxygen/nitrogen selectivity ratio     7.34
(C) oxygen capacity cc/g     8.64
(D) oxygen capacity cc/cc     5.89
(E) apparent density g/cc     0.682

Example 7

Coconut char was fed to the furnace at 30 pounds per hour. The furnace temperature was 1010°C and the furnace residence time was 45 minutes. A constant nitrogen purge was maintained at 25 SCFM (707.9 dm$^3$/min). Gas diffusivity values were calculated as described in Example 1. A carbon sieve having the following physical characteristics was produced:

(A) oxygen diffusivity$\times10^{-8}$ cm/sec$^2$     605
(B) oxygen/nitrogen selectivity ratio     8.8
(C) oxygen capacity cc/g     7.44
(D) oxygen capacity cc/cc     5.18
(E) apparent density g/cc     0.697

Example 8

Coconut char was fed to the furnace at 48 pounds per hour. The furnace temperature was 999°C and the furnace residence time was 25 minutes. A constant nitrogen purge was maintained at 25.5 SCFM (722 dm$^3$/min). Gas diffusivity values were calculated as described in Example 1. A carbon sieve having the following physical characteristics was produced:

(A) oxygen diffusivity$\times10^{-3}$ cm/sec$^2$     791
(B) oxygen/nitrogen selectivity ratio     6.9
(C) oxygen capacity cc/g     6.80
(D) oxygen capacity cc/cc     4.43
(E) apparent density g/cc     0.652

Example 9

As a comparison for the carbon molecular sieves produced by the instant invention, a prior art process (1) was reproduced as follows:

Dried coconut shell was charred in a silica boat by heating at 5°C/minute up to 500°C in a stream of nitrogen. The char was crushed and sieved and a 20×40 mesh (U.S. sieve) fraction was heat treated in a fluidized bed in a nitrogen atmosphere heating at a rate of 5°C per minute up to 950°C and held at 950°C for 2 hours. Gas diffusivity values were calculated as described in Example 1. The molecular sieve thus produced had the following physical characteristics:

(A) oxygen diffusivity$\times10^{-8}$ cm/sec$^2$     2786
(B) oxygen/nitrogen selectivity ratio     7.8
(C) oxygen capacity cc/g     1.17
(D) oxygen capacity cc/cc     0.8

(E) apparent density g/cc      0.681

(1) See S. P. Nandi and P. L. Walker, Jr., *Fuel 54* 169 (1975).

Comparison of these prior art molecular sieve characteristics with those of the present invention shows a major difference. The prior art process of heating coconut char at 1742°F (950°C) for 2 hours under nitrogen generated a carbon sieve with a high oxygen diffusivity value, high oxygen/nitrogen selectivity but very low oxygen capacity. The present process maximizes both capacity and selectivity without restricting diffusivity to unreasonably low levels.

Claims to the invention follow.

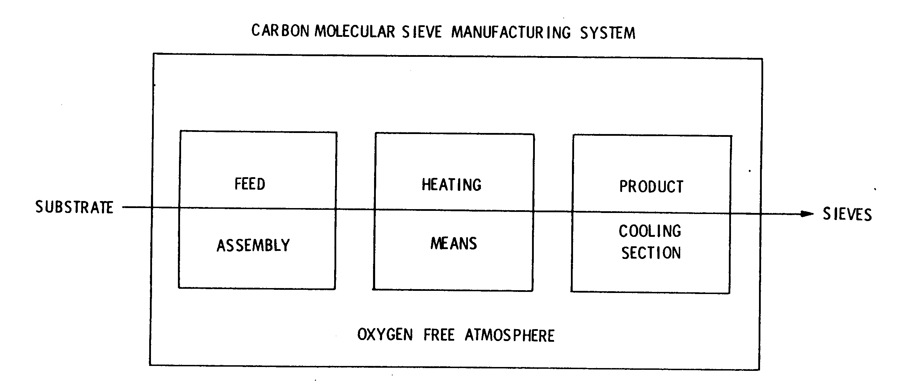

## Claims

1. A process for the continuous manufacturing of carbon molecular sieves having average effective pore diameters of from 0.2-1.5 nm (2 to 15 Angstroms) which comprises continuously feeding a charred substrate to a means for heating said substrate and heating said substrate under substantially oxygen free conditions of less than 100 ppm oxygen and under an inert gas purge without the use of an externally added pore blocking substance, at a temperature range of about 482°C to 1093°C for a time period of about 5 to 90 minutes.

2. The process of Claim 1 wherein the heating means is an electrically powered, infrared heated continuous transport type furnace.

3. The process of Claim 1 wherein the substrate is an agglomerated substrate.

4. The process of Claim 1 wherein the substrate is coconut char.

5. The process of Claim 1 for the continuous manufacturing of carbon molecular sieves having an average effective pore diameter of about 0.4 nm (4 Angstroms) which further comprises continuously feeding a charred substrate to a means for heating said substrate and heating said substrate under oxygen free conditions, without the use of an externally added pore blocking substance, at a temperature range of about 927°C to 1093°C for a time period of about 5 to 90 minutes.

6. The process of Claim 5 wherein the substrate is coconut char.

## Patentansprüche

1. Verfahren zur kontinuierlichen Herstellung von Kohlenstoffmolekularsieben mit durchschnittlichen effektiven Porendurchmessern von 0,2-1,5 nm (2-15 Angström), umfassend das kontinuierliche Zuführen eines verkohlten Substrates zu einer Einrichtung zum Erhitzen des Substrates und Erhitzen des Substrates unter im wesentlichen sauerstofffreien Bedingungen bei weniger als 100 ppm Sauerstoff und unter Durchströmen mit Inertgas ohne die Verwendung einer extern zugegebenen Porenblockierungs-Substanz bei einem Temperaturbereich von etwa 482°C bis 1093°C über einen Zeitraum von etwa 5 bis 90 Minuten.

2. Verfahren nach Anspruch 1, wobei die Erhitzungseinrichtung ein elektrisch betriebener, infrarotbeheizter Ofen vom kontinuierlichen Transporttyp ist.

3. Verfahren nach Anspruch 1, wobei das Substrat ein agglomiertes Substrat ist.

4. Verfahren nach Anspruch 1, wobei das Substrat Kokosnußkohle ist.

5. Verfahren nach Anspruch 1 zur Kontinuierlichen Herstellung von Kohlenstoffmolekularsieben mit einem durchschnittlichen effektiven Porendurchmesser von etwa 0,4 nm (4 Angström), umfassend weiterhin das kontinuierliche Zuführen eines verkohlten Substrates zu einer Einrichtung zum Erhitzen des Substrates und Erhitzen des Substrates unter sauerstofffreien Bedingungen ohne die Verwendung einer extern zugegebenen Porenblockierungs-Substanz bei einem Temperaturbereich von etwa 927°C bis 1093°C über einen Zeitraum von etwa 5 bis 90 Minuten.

6. Verfahren nach Anspruch 5, wobei das Substrat Kokosnußkohle ist.

## Revendications

1. Un procédé pour la fabrication en continu de tamis moléculaires à base de carbone ayant des diamètres effectifs moyens des pores de 0,2-1,5 nm (2 à 15 angströms) qui comprend l'introduction en continu d'un substrat carbonisé dans un dispositif de chauffage dudit substrat et le chauffage dudit substrat essentiellement à l'abri de l'oxygène à une concentration inférieure à 100 ppm d'oxygène et sans addition externe d'une substance d'obturation des pores, dans une gamme des températures d'environ 482°C à 1093°C pendant une période d'environ 5 à 90 minutes.

2. Le procédé de la revendication 1 dans lequel le dispositif de chauffage est un four à transport continu à chauffage infrarouge alimenté en électricité.

3. Le procédé de la revendication 1 dans lequel le substrat est un substrat aggloméré.

4. Le procédé de la revendication 1 dans lequel le substrat est un produit de carbonisation de noix de coco.

5. Le procédé de la revendication 1 pour la fabrication en continu de tamis moléculaires à base de carbone ayant un diamètre efficace moyen des pores d'environ 0,4 nm (4 angströms) qui, de plus, comprend l'introduction en continu d'un substrat carbonisé dans un dispositif de chauffage dudit substrat et le chauffage dudit substrat en l'absence d'oxygène sans addition externe d'une substance d'obturation des pores, dans une gamme des températures d'environ 927°C à 1093°C pendant une période d'environ 5 à 90 minutes.

6. Le procédé de la revendication 5 dans lequel le substrat est un produit de carbonisation de noix de coco.

CARBON MOLECULAR SIEVE MANUFACTURING SYSTEM

SUBSTRATE

SIEVES

| FEED ASSEMBLY | HEATING MEANS | PRODUCT COOLING SECTION |

OXYGEN FREE ATMOSPHERE